Europäisches Patentamt

European Patent Office

Office européen des brevets

(19)

(11) **EP 0 576 331 B1**

(12) **FASCICULE DE BREVET EUROPEEN**

(45) Date de publication et mention
de la délivrance du brevet:
**03.12.1997 Bulletin 1997/49**

(51) Int Cl.$^6$: **G11B 7/12**, G11B 11/10

(21) Numéro de dépôt: **93401557.9**

(22) Date de dépôt: **17.06.1993**

(54) **Dispositif en optique intégrée pour le contrôle de la focalisation et de la position d'une image**

Integrierte optische Vorrichtung zur Kontrolle des Fokus und der Position eines Bildes

Integrated optical device for the supervision of the focus and position of an image

(84) Etats contractants désignés:
**DE GB IT NL**

(30) Priorité: **22.06.1992 FR 9207570**

(43) Date de publication de la demande:
**29.12.1993 Bulletin 1993/52**

(73) Titulaire: **COMMISSARIAT A L'ENERGIE
ATOMIQUE
75015 Paris (FR)**

(72) Inventeurs:
- **Labeye, Pierre
  F-38000 Grenoble (FR)**
- **Valette, Serge
  F-38100 Grenoble (FR)**

(74) Mandataire: **Signore, Robert et al
c/o BREVATOME
25, rue de Ponthieu
75008 Paris (FR)**

(56) Documents cités:
**EP-A- 0 270 429**

# Description

## Domaine technique

La présente invention a pour objet un dispositif en optique intégrée pour le contrôle de la focalisation et de la position d'une image. Elle trouve une application privilégiée dans l'enregistrement magnéto-optique où elle permet de perfectionner les têtes de lecture. Mais elle peut être également utilisée hors de cette technique, pour la réalisation de capteurs de déplacement.

## Etat de la technique antérieure

On connaît des dispositifs de contrôle de la focalisation d'une image qui comprennent essentiellement une lentille astigmatique et un photodétecteur à quatre quadrants. Ce photodétecteur est disposé entre la focale sagittale et la focale tangentielle de la lentille, dans un plan perpendiculaire à l'axe optique de celle-ci. Si l'image examinée est correctement focalisée, l'image sur le photodétecteur est circulaire et éclaire uniformément les quatre quadrants. Si, au contraire, l'image est défocalisée, elle se trouve plus proche de la focale sagittale ou de la focale tangentielle, ce qui privilégie deux quadrants du photodétecteur aux dépens des deux autres. En mesurant la somme des signaux délivrés par deux quadrants diagonalement opposés et en faisant la différence de ces sommes, on obtient un signal qui reflète la défocalisation.

Un tel dispositif peut non seulement servir au contrôle de la focalisation d'une image, c'est-à-dire au contrôle de sa position longitudinale le long d'un axe, mais aussi à contrôler sa position transversale, c'est-à-dire dans un plan perpendiculaire à l'axe optique de la lentille. Pour cela, on regroupe autrement les signaux délivrés par les quatre quadrants, par exemple en faisant la somme des signaux délivrés par les deux quadrants situés au-dessus de l'horizontale ainsi que la somme des signaux délivrés par les deux quadrants en dessous et en formant la différence de ces sommes. Cette différence donne l'écart de position.

Si ces dispositifs sont satisfaisants à certains égards, ils présentent néanmoins l'inconvénient de ne pas pouvoir être employés dans un dispositif en optique intégrée. En effet, dans cette technique particulière, toutes les fonctions de guidage, de focalisation, de collimation, etc. sont mises en oeuvre dans un même plan, qui est celui des couches minces utilisées. On perd ainsi une dimension, qui est la dimension transversale perpendiculaire à l'axe optique général. On ne peut donc plus utiliser le système de l'art antérieur puisque celui-ci nécessite un ensemble de quatre détecteurs répartis justement dans le tel plan transversal.

Pour mieux comprendre la spécificité de l'optique intégrée, un exemple de tête de lecture réalisée dans cette technique est illustré sur la figure 1 annexée. Cette tête est décrite dans le document FR-A-2 606 921.

Tel que représenté, le dispositif comprend une structure de guidage 20 comportant un substrat 22, par exemple en silicium, une première couche 24, par exemple en silice $SiO_2$ d'indice 1,45, une seconde couche 26, par exemple en $Si_3N_4$ d'indice 2 et une troisième couche 28, par exemple en $SiO_2$ d'indice 1,45. L'épaisseur des première et troisième couches est de l'ordre de 1,5 à 3 µm. Celle de la couche intercalaire de l'ordre de 0,1 à 0,2 µm.

Par l'effet de ces différents indices, une onde lumineuse peut être guidée dans la couche 26.

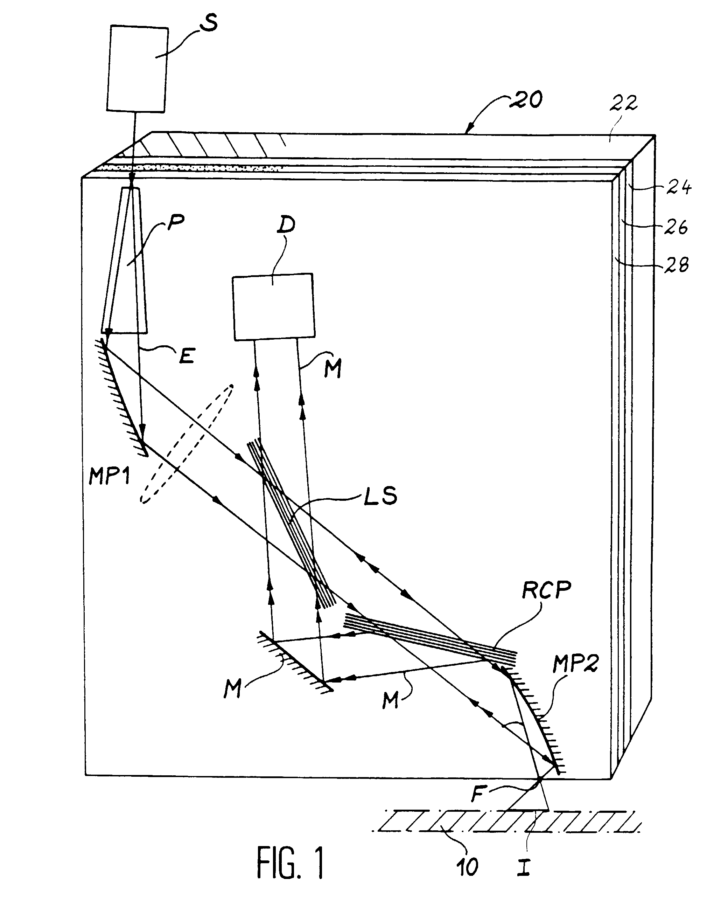

Le dispositif représenté sur la figure 1 comprend encore une source lumineuse S et divers composants intégrés, à savoir, un polariseur P, une optique de collimation constituée par un miroir cylindrique MP1 à section parabolique, une optique de focalisation constituée par un miroir cylindrique à section parabolique MP2, un réseau convertisseur de polarisation RCP, un miroir M placé sur le trajet du faisceau diffracté par le réseau RCP, une lame semitransparente LS et enfin un photodétecteur D intégré ou non à la structure de guidage.

Le faisceau lumineux issu d'un tel dispositif vient frapper un support 10, qui est un support d'enregistrement magnétique. La tache lumineuse I marque la zone d'impact du faisceau sur ce support.

Le fonctionnement de ce dispositif est complétement décrit dans le document FR-A-2 606 921 précité. Il suffit d'observer ici que si l'on veut contrôler l'image I (en focalisation et en position), on ne pourra pas utiliser le dispositif de contrôle connu puisque toute l'information optique se trouve confinée dans un seul plan, en l'occurrence le plan des couches 24, 26, 28. Aucune information n'est donc présente dans un plan traversal, où il faudrait placer le photodétecteur à quatre quadrants.

La présente invention a justement pour but de remédier à cet inconvénient en proposant un dispositif de contrôle de la focalisation et/ou de la position, qui est réalisé en optique intégrée. Grâce à cette structure particulière l'invention peut s'insérer aisément dans une tête de lecture telle que celle qui vient d'être décrite. Naturellement, cette application n'interdit pas une utilisation autonome en tant que capteur de position.

## Exposé de l'invention

La présente invention propose un dispositif comprenant essentiellement quatre moyens de photodétection disposés dans le plan d'une structure de guidage (en d'autres termes, dans le plan longitudinal et non plus dans un plan transversal perpendiculaire à l'axe optique).

De façon plus précise, le dispositif de l'invention est caractérisé dans la revendication 1.

Les moyens de mesure peuvent être constitués soit par des photodétecteurs intégrés à la structure, soit par des microguides optiques reliant les quatre points où a lieu la mesure à quatre photorécepteurs distants de ces points. Dans ce dernier cas, les photorécepteurs peuvent être soit intégrés à, soit rapportés sur la structure de guidage.

Lorsqu'il s'agit d'appliquer ce dispositif à une tête de lecture en optique intégrée, le contrôle de la position de l'image devient un contrôle du suivi de la piste d'enregistrement.

Le dispositif peut comprendre une seule optique, de focalisation, ou deux optiques, la première de collimation et la seconde, de focalisation.

On peut observer que dans un dispositif de focalisation conforme à l'art antérieur, la fonction de contrôle est essentiellement remplie par la lentille, laquelle est astigmatique et qui traduit en différence d'éclairement la défocalisation (et éventuellement la différence de position). Le détecteur à quatre quadrants ne fait que traduire cette répartition d'éclairement en signal électrique. Le rôle de la lentille est donc essentiel dans un tel dispositif.

En optique intégrée, la réalisation d'une lentille astigmatique est impossible. Le sens de la défocalisation doit donc être déterminé, dans ce cas, par la position des détecteurs et non par l'astigmatisme de la lentille comme dans l'art antérieur. La transposition directe d'un dispositif classique en optique intégrée n'est donc pas possible.

**Brève description des dessins**

- la figure 1, déjà décrite, montre une tête de lecture en optique intégrée selon l'art antérieur ;
- la figure 2 illustre le principe du dispositif de l'invention ;
- la figure 3 illustre une variante à microguides ;
- la figure 4 montre l'effet d'un décalage du faisceau par rapport à la piste ;
- la figure 5 montre l'effet d'une défocalisation du faisceau ;
- la figure 6 montre un exemple de tête de lecture magnéto-optique équipée d'un dispositif selon l'invention ;
- la figure 7 illustre un mode de réalisation avec un cinquième détecteur ;
- la figure 8 illustre un mode de réalisation avec un cinquième microguide ;
- la figure 9 illustre un autre exemple de tête de lecture équipée d'un dispositif selon l'invention,
- la figure 10 illustre une variante à une seule optique.

**Exposé détaillé de modes de réalisation**

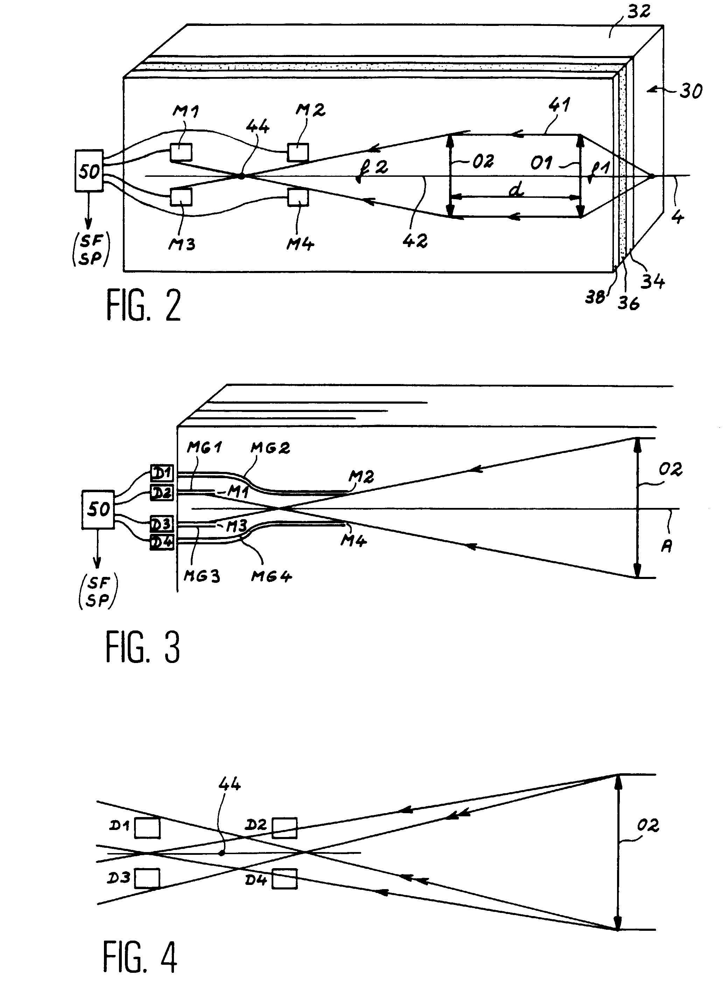

On voit, sur la figure 2, une structure de guidage 30 avec un substrat 32, une première couche de confinement 34, une couche guide 36 et une seconde couche de confinement 38. Cette structure 30 peut être analogue à la structure 20 décrite plus haut à propos de la figure 1. Dans cette structure sont intégrés :

- une première optique O1, ayant une fonction de collimation, pour le faisceau lumineux provenant d'une image I ; cette optique possède une focale f1 et elle délivre un faisceau collimaté 41,
- une seconde optique O2, ayant une fonction de focalisation, séparée de la première O1 d'une distance d et qui reçoit le faisceau collimaté 41 ; cette seconde optique possède un axe optique 42, un foyer 44 et une distance focale f2 ;
- quatre photodétecteurs D1, D2, D3, D4 situés en quatre points M1, M2, M3, M4, tous situés dans le plan de la couche guide 36,
- un moyen 50 pour former diverses sommes et différences à partir des signaux délivrés par les quatre photodétecteurs.

Comme on le voit sur la figure 2, les points M2 et M4 sont situés de part et d'autre de l'axe optique 42 et à une distance de l'optique O2 inférieure à la focale f2. En revanche, les points M1 et M3 sont situés au-delà du foyer 44, mais toujours symétriquement par rapport à l'axe 42. En d'autres termes, dans la variante illustrée, les points M1, M2, M3, M4 sont les sommets d'un rectangle dont le foyer 44 est le centre. Mais d'autres dispositions sont possibles (en trapèze, par exemple, avec un écart entre M2 et M4 plus petit ou plus grand que l'écart entre M1 et M3, ou encore en carré).

Dans l'exemple de la figure 2, les photo-détecteurs proprement dits, D1, D2, D3, D4 sont "hybridés" sur la structure optique, c'est-à-dire rapportés sur celle-ci comme l'était le détecteur D de la tête illustrée sur la figure 1.

Sur la figure 3 (où seule la seconde optique O2 est représentée), on voit un autre mode de réalisation où sont employés quatre microguides de reprise, MG1, MG2, MG3, MG4 dont une extrémité est placée aux points M1, M2, M3, M4 répartis comme exposé plus haut et l'autre extrémité est couplée à un photo-détecteur, respectivement D1, D2, D3, D4. Dans la variante illustrée, ces quatre photodétecteurs sont rapportés sur la tranche de la structure de guidage.

Quelle que soit la variante mise en oeuvre, lorsqu'il s'agira de contrôler la focalisation, le circuit 50 formera d'abord la somme des signaux délivrés par les photo-détecteurs D1 et D3 et la somme des signaux délivrés par les photodétecteurs D2 et D4. Il effectuera ensuite la différence entre ces sommes, soit :

$$S_F = (D1 + D3) - (D2 + D4)$$

où chaque signal est noté par la référence du photo détecteur qui le délivre.

Lorsqu'il s'agira de contrôler la position par rapport à la piste, le circuit 50 calculera le signal $S_P$ donné par

$$S_P = (D2 + D3) - (D1 + D4).$$

La figure 4 montre l'effet d'une défocalisation. Le faisceau provenant de l'optique O2 converge soit avant, soit après le foyer 44, privilégiant ainsi soit le couple D1, D3, soit le couple D2, D4. Dans les deux cas, le signal $S_F$ se trouve déséquilibré, dans un sens ou dans l'autre (mais le signal $S_P$ reste invariant).

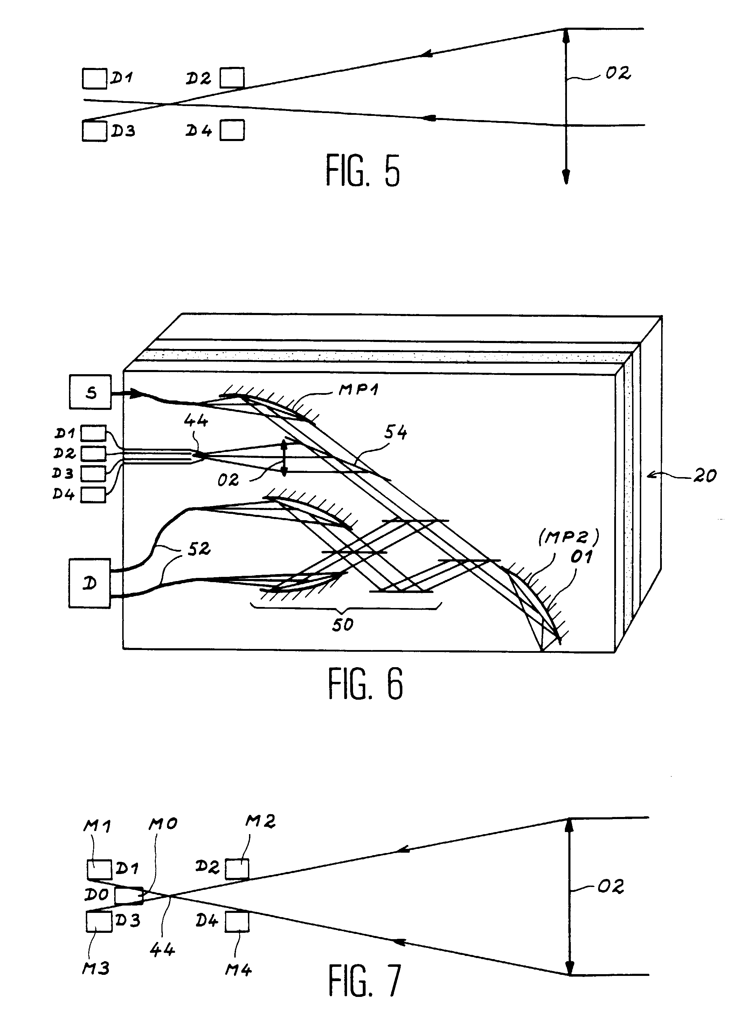

La figure 5 montre, de son côté, l'effet d'un décalage du faisceau par rapport à une position de référence (une piste dans le cas d'un enregistrement magnéto-optique). Le faisceau décalé dans un sens privilégie D2 et D3 et, dans l'autre, D4 et D1. Dans les deux cas, le signal $S_P$ est déséquilibré (mais le signal $S_F$ reste inchangé).

De préférence, on choisira une distance focale f2 pour la seconde optique plus grande que la distance focale f1 de la première, car le signal de défocalisation varie comme le carré du rapport f2/f1 alors que le rapport des taches de diffraction varie seulement en f2/f1.

Le traitement des signaux peut être réalisé de plusieurs manières. On peut, par exemple, numériser chaque signal délivré par un photodétecteur (et cela à l'aide d'un convertisseur analogique-numérique) et réaliser ensuite le traitement sous forme numérique à l'aide d'un microprocesseur. On peut aussi traiter analogiquement les signaux délivrés par les photo-détecteurs à l'aide de circuits de type amplificateurs ou amplificateurs opérationnels.

Le signal obtenu, qu'il mesure la défocalisation ou le défaut de position, peut constituer un signal d'erreur pour commander un activateur (galvanométrique ou piézoélectrique ou de tout autre type) qui va déplacer les moyens optiques pour refocaliser la tache et/ou la recentrer.

Le dispositif qui vient d'être décrit est parfaitement adapté aux structures en optique intégrée comme les têtes de lecture magnéto-optiques. Il suffit de disposer, dans une telle tête, un moyen de prélèvement d'une partie du faisceau optique de retour et de réaliser le dispositif de contrôle autour de ce faisceau prélevé. C'est ce qui est représenté sur la figure 6 où l'on retrouve une structure de guidage 20, comme sur la figure 1, avec une source S, un premier miroir MP1, un second miroir MP2 et un système interférométrique référencé de manière générale 50 et composé de lames semitransparentes et de miroirs. Ce système alimente deux microguides 52 reliés à un détecteur D. Cette tête comprend en outre, conformément à l'invention, une lame semitransparente 54, par exemple à 90% de transmission et 10% de réflexion, située entre MP1 et MP2. Cette lame renvoie vers une optique 02 (en l'occurrence une lentille) le faisceau qu'elle réfléchit et c'est sur ce faisceau que s'effectue le contrôle de focalisation et de position. Dans ce cas, le miroir MP2 constitue l'optique O2 du dispositif de contrôle.

Dans l'exemple illustré, quatre microguides partent de quatre points répartis autour du foyer 44 pour alimenter quatre détecteurs D1, D2, D3, D4 rapportés en bout de structure 20.

Le dispositif de l'invention n'exclut pas que l'on puisse mesurer en outre la puissance optique au foyer de l'optique O2. Pour cela, il suffit de placer en ce foyer un photodétecteur supplémentaire, comme illustré sur la figure 7 où l'on voit un cinquième photodétecteur D0 placé en un point M0 proche du foyer 44.

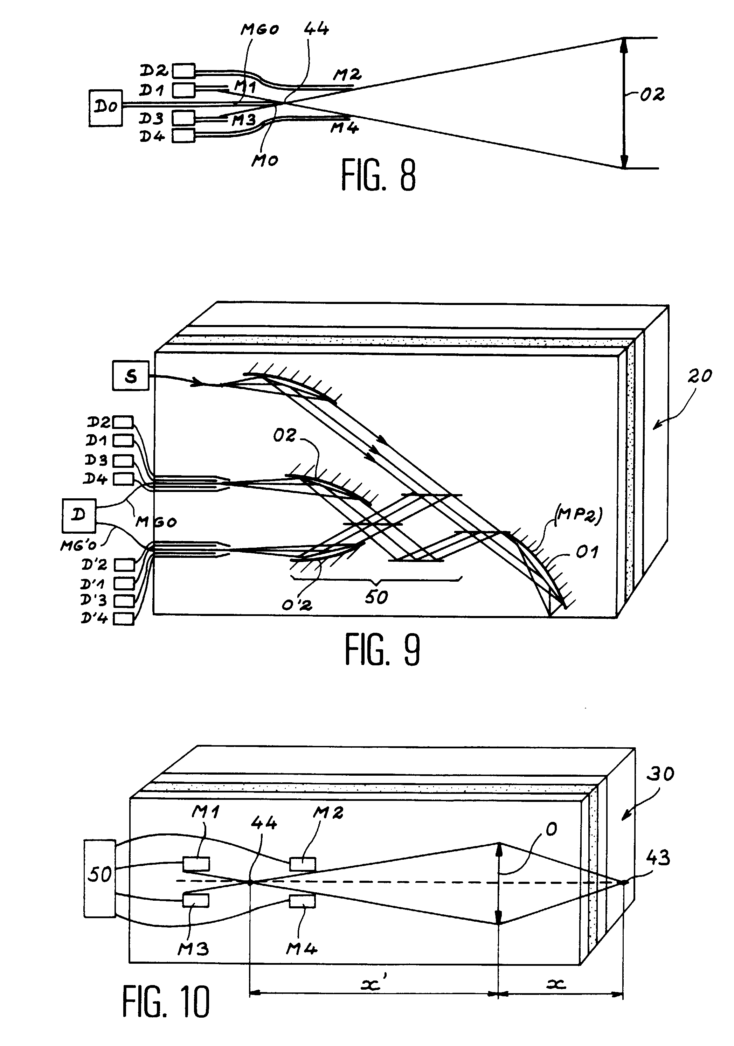

On peut aussi rejeter ce cinquième photo-détecteur au-delà du foyer comme illustré sur la figure 8 en utilisant un cinquième microguide MG0 qui relie le point M0, proche du foyer 44, au détecteur D0 intégré ou hybridé plus loin.

Cette disposition permet encore d'adapter très simplement une tête de lecture en optique intégrée pour la munir de moyens de contrôle de la focalisation et de suivi de piste. C'est ce qui est représenté sur la figure 9 où l'on voit une tête semblable à celle de la figure 6 mais où l'ensemble interférentiel 50 est complété par des groupes de quatre microguides répartis autour de chacun des microguides MG0, MG'0 servant à la lecture proprement dite.

Dans cette variante, chaque dispositif de contrôle de focalisation et de suivi de piste travaille avec le miroir MP2 comme première optique 01 et avec le miroir 02 (respectivement 0'2) de l'ensemble interférométrique, comme seconde optique.

Sans que l'invention ne se limite en rien aux exemples qui vont suivre, on peut indiquer que les dimensions suivantes peuvent être adoptées : le spot de lecture ou d'écriture peut présenter une taille d'environ 1 $\mu m^2$ ; la sensibilité à la focalisation est aussi de l'ordre du micron ; la focale de la première optique 01 peut être de 50 $\mu m$ ; afin d'avoir une bonne sensibilité, on peut prendre comme focale de la seconde optique 02, environ 250 $\mu m$ ; un déplacement longitudinal du spot de 1 $\mu m$ au niveau de la première optique correspond à un déplacement longitudinal du spot de 25 $\mu m$ au foyer de la seconde optique ; si la taille tranversale du spot au foyer de la première optique est de 1 $\mu m$, elle sera de 5 $\mu m$ au foyer de la seconde, donc adaptée à des microguides monomodes de reprise ; l'angle de divergence du faisceau éclairant la première optique est de l'ordre de 20 degrés si l'on prend le cas standard ; l'angle de convergence du faisceau après la seconde optique sera donc de 4 degrés.

Le dispositif qui vient d'être décrit utilise deux lentilles, l'une de collimation, l'autre de focalisation pour être compatible avec une tête de lecture magnéto-optique telle que décrite dans le document FR-A-2 606 921.

Cependant, dans le cas où le dispositif serait utilisé pour d'autres applications (comme par exemple un capteur de déplacement), une seule optique (lentille ou miroir hyperbolique) conjuguant les deux foyers serait suffisante pour assurer le fonctionnement du système.

C'est ce qui est représenté sur la figure 10 où l'on voit une seule lentille O recevant un faisceau d'un point 43 et focalisant ce faisceau au point 44. Les considérations développées plus haut sur le grandissement axial et le grandissement transversal restent valables. Il suffit de remplacer f1 par x et f2 par x' où x et x' sont marqués sur la figure 10.

**Revendications**

1. Dispositif en optique intégrée pour le contrôle de la focalisation et de la position d'une image (I), caractérisé par le fait qu'il comprend :

   • une structure de guidage (20) en optique intégrée comprenant un substrat (22) et un empilement de couches minces de guidage (24, 26, 28),
   • au moins une optique, dite de focalisation (O2), intégrée à la structure de guidage (20), cette optique ayant un axe optique (32), une distance focale (f2) et un foyer (34),
   • quatre moyens de mesure (D1, D2, D3, D4) des intensités lumineuses reçues en quatre points (M1, M2, M3, M4), ces quatre points étant situés dans un même plan passant par l'axe optique (32) et parallèle à la structure de guidage (20), ces quatre points (M1, M2, M3, M4) étant répartis autour du foyer (34) de l'optique (O2), un premier (M2) et un deuxième (M4) de ces points étant situés de part et d'autre de l'axe optique (32) à une distance de l'optique (O2) inférieure à la distance focale (f2), un troisième (M1) et un quatrième (M3) de ces points étant également situés de part et d'autre de l'axe optique (32) mais à une distance de l'optique (O2) supérieure à la distance focale (f2), le premier ($M_2$) et le troisième ($M_1$) de ces points étant situés sur un même côté de l'axe optique (32) dans ce plan
   • des moyens (50) pour :

   a) faire une première somme (D2+D4) des intensités reçues au premier (M2) et au deuxième points (M4), faire une deuxième somme (D1+D3) des intensités reçues au troisième (M1) et quatrième points (M3), et faire une première différence entre cette première et cette deuxième sommes ((D1+D3)-(D2+D4)), ce qui donne un signal ($S_F$) de contrôle de la focalisation,
   b) faire une troisième somme (D1+D4) des intensités reçues au troisième (M1) et au deuxième (M2) points, faire une quatrième somme (D2+D3) des intensités reçues au premier (M2) et au quatrième (M3) points, et faire une seconde différence entre cette troisième et quatrième sommes ((D2+D3)-(D1+D4)), ce qui donne un signal ($S_P$) de contrôle de position.

2. Dispositif selon la revendication 1, caractérisé par le fait que l'optique (O2) est une lentille intégrée.

3. Dispositif selon la revendication 1, caractérisé par le fait que l'optique (O2) est un miroir parabolique intégré.

4. Dispositif selon la revendication 1, caractérisé par le fait que les quatre moyens de mesure de l'intensité reçue en quatre points sont constitués par quatre photodétecteurs (D1, D2, D3, D4) placés en ces quatre points (M1, M2, M3, M4).

5. Dispositif selon la revendication 1, caractérisé par le fait que les quatre moyens de mesure de l'intensité reçue en quatre points sont constitués par :

   • quatre microguides optiques (MG1, MG2, MG3, MG4) intégrés à la structure de guidage (20), chaque microguide ayant une extrémité en l'un des quatre points (M1, M2, M3, M4),
   • quatre photodétecteurs (D1, D2, D3, D4) disposés respectivement aux autres extrémités des microguides (MG1, MG2, MG3, MG4).

6. Dispositif selon la revendication 5, caractérisé par le fait que les quatre photodétecteurs (D1, D2, D3, D4) sont rapportés sur la structure de guidage (20).

7. Dispositif selon l'une quelconque des revendications 1 à 6, caractérisé par le fait qu'il est intégré dans une tête de lecture en optique intégrée (20, S, P, MP1, MP2, RCP, LS, D), cette tête produisant un faisceau lumineux dirigé sur une piste d'un support d'enregistrement (10), l'image dont on veut contrôler la focalisation et la position étant l'image (I) produite par ce faisceau sur ladite piste (10) que l'on veut contrôler, le contrôle de position étant alors un contrôle de suivi de piste.

8. Dispositif selon la revendication 7, caractérisé par le fait que la tête de lecture en optique intégrée comprend une optique de collimation (MP2) disposée à la sortie de la tête, le dispositif comprenant une autre optique, de collimation, qui est constituée par cette optique de collimation (MP2) de la tête.

9. Dispositif selon la revendication 8, caractérisé par le fait qu'il comprend une lame séparatrice (42) disposée entre l'optique de collimation (O1) et l'optique de focalisation (O2), cette lame séparatrice (42) prélevant une partie du faisceau collimaté provenant de l'optique de collimation (O1).

10. Dispositif selon la revendication 7, caractérisé par le fait que la tête de lecture comprend au moins un microguide supplémentaire (MGO) ayant une première extrémité située en un point (MO) coïncidant avec le foyer (34) de l'optique de focalisation et une seconde extrémité couplée à un détecteur (D0).

**Patentansprüche**

1. Integrierte optische Vorrichtung zur Kontrolle bzw. Steuerung des Fokus und der Position eines Bildes (I)
**dadurch gekennzeichnet,** daß sie umfaßt:

- eine integrierte optische Leitstruktur (20), ein Substrat (22) und einen Stapel aus leitenden Dünnschichten (24, 26, 28),
- wenigstens eine sogenannte Fokussieroptik (02), integriert in die Leitstruktur (20), wobei diese Optik eine optischen Achse (32), eine Fokaldistanz (f2) und einen Fokus (34) hat,
- vier Meßeinrichtungen (D1, D2, D3, D4) der Lichtintensitäten, empfangen in vier Punkten (M1, M2, M3, M4), wobei diese vier Punkte sich in derselben, zur Leitstruktur (20) parallelen Ebene befinden wie die optische Achse (32), diese vier Punkte (M1, M2, M3, M4) um den Fokus (34) der Optik (02) herum verteilt sind, ein erster (M2) und ein vierter (M3) dieser Punkte sich beiderseits der optischen Achse (32) befinden, mit einer Distanz der Optik (02) kleiner als die Fokaldistanz (f2), ein dritter (M1) und ein vierter (M3) dieser Punkte sich ebenfalls beiderseits der optischen Achse (32) befinden, aber mit einer Distanz der Optik (02) größer als die Fokaldistanz (f2), und der erste (M2) und der dritte (M1) dieser Punkte sich auf derselben Seite der optischen Achse (32) in dieser Ebene befinden,
- Einrichtungen (50) zum:

    a) Bilden einer ersten Summe (D2+D4) der am ersten Punkt (M2) und am zweiten Punkt (M4) erhaltenen Intensitäten, Bilden einer zweiten Summe (D1+D3) der am dritten Punkt (M1) und am vierten Punkt (M3) erhaltenen Intensitäten, und Bilden einer ersten Differenz zwischen dieser ersten und dieser zweiten Summe ((D1+D3)-(D2+D4)), was ein Fokussierungs-Steuersignal ($S_F$) ergibt,
    b) Bilden einer dritten Summe (D1+D4) der am dritten Punkt (M1) und am zweiten Punkt (M4) erhaltenen Intensitäten, Bilden einer vierten Summe (D2+D3) der am ersten Punkt (M2) und am vierten Punkt (M3) erhaltenen Intensitäten, und Bilden zweiten Differenz zwischen dieser dritten und dieser vierten Summe ((D2+D3) - (D1+D4)), was ein Polarisierungs-Steuersignal ($S_P$) ergibt,

2. Vorrichtung nach Anspruch 1, dadurch gekennzeichnet, daß die Optik (02) eine integrierte Linse ist.

3. Vorrichtung nach Anspruch 1, dadurch gekennzeichnet, daß die Optik (02) ein integrierter Parabolspiegel ist.

4. Vorrichtung nach Anspruch 1, dadurch gekennzeichnet, daß die vier Meßeinrichtungen der in vier Punkten erhaltenen Intensität durch vier Photodetektoren (D1, D2, D3, D4) gebildet werden, die in diesen vier Punkten (M1, M2, M3, M4) angeordnet sind.

5. Vorrichtung nach Anspruch 1, dadurch gekennzeichnet, daß die vier Meßeinrichtungen der in vier Punkten erhaltenen Intensität gebildet werden durch:

- vier optische Mikroleiter (MG1, MG2, MG3, MG4), integriert in die Leitstruktur (20), wobei jeder Mikroleiter ein Ende in einem der vier Punkte (M1, M2, M3, M4) hat,
- vier Photodetektoren (D1, D2, D3, D4), jeweils an den vier Enden der Mikroleiter (MG1, MG2, MG3, MG4) angeordnet.

6. Vorrichtung nach Anspruch 5, dadurch gekennzeichnet, daß die vier Photodetektoren (D1, D2, D3, D4) an die Leitstruktur (20) angefügt bzw. angebaut sind.

7. Vorrichtung nach einem der Ansprüche 1 bis 6, dadurch gekennzeichnet, daß sie integriert ist in einen integrierten optischen Lesekopf (20, S, P, MP1, MP2, RCP, LS, D), wobei dieser Kopf einen auf einen Aufzeichnungsträger (10) gerichteten Lichtstrahl erzeugt, wobei das Bild, dessen Fokus und Position man steuern will, das durch diesen Strahl auf besagter Spur (10) erzeugte Bild (I) ist und die Positionssteuerung dann eine Spurnachlaufsteuerung ist.

8. Vorrichtung nach Anspruch 7, dadurch gekennzeichnet, daß der integrierte optische Lesekopf eine Kollimationsoptik (MP2) umfaßt, angeordnet am Ausgang des Kopfes, wobei die Vorrichtung eine andere Optik zur Kollimation umfaßt, die gebildet wird durch diese Kollimationsoptik (MP2) des Kopfes.

9. Vorrichtung nach Anspruch 8, dadurch gekennzeichnet, daß sie eine Teilerplatte (42) umfaßt, angeordnet zwischen der Kollimationsoptik (01) und der Fokussieroptik (02), wobei diese Teilerplatte (42) einen Teil des von der Kollimationsoptik (01) kommenden kollimierten Strahls entnimmt.

**10.** Vorrichtung nach Anspruch 7, dadurch gekennzeichnet, daß der Lesekopf wenigstens einen zusätzlichen Mikroleiter (MGO) umfaßt, dessen erstes Ende sich in einem Punkt (MO) befindet, der zusammenfällt mit dem Fokus (34) der Fokussieroptik, und ein zweites Ende, das mit einem Detektor (D0) gekoppelt ist.

**Claims**

**1.** Integrated-optics device for checking the focusing and position of an image (I), characterized in that it comprises:

. an integrated-optics guiding structure (20) comprising a substrate (22) and a stack of thin guiding layers (24, 26, 28),

. at least one optic, called the focusing optic (O2), integrated into the guiding structure (20), this optic having an optical axis (32), a focal length (f2) and a focus (34),

. four means (D1, D2, D3, D4) for measuring the light intensities received at four points (M1, M2, M3, M4), these four points lying in the same plane passing through the optical axis (32) and parallel to the guiding structure (20), these four points (M1, M2, M3, M4) being distributed about the focus (34) of the optic (O2), a first (M2) and a second (M4) of these points lying on each side of the optical axis (32) at a distance from the optic (O2) less than the focal length (f2), a third (M1) and a fourth (M3) of these points also lying on each side of the optic axis (32) but at a distance from the optic (O2) greater than the focal length (f2), the first (M2) and the third (M1) of these points lying on the same side of the optical axis (32) in this plane,

. means (50) for:

a) carrying out a first sum (D2 + D4) of the intensities received at the first (M2) and second (M4) points, carrying out a second sum (D1 + D3) of the intensities received at the third (M1) and fourth (M3) points and carrying out a first difference between these first and second sums ((D1 + D3) - (D2 + D4)), which gives a signal ($S_F$) for checking the focusing,
b) carrying out a third sum (D1 + D4) of the intensities received at the third (M1) and second (M2) points, carrying out a fourth sum (D2 + D3) of the intensities received at the first (M2) and fourth (M3) points and carrying out a second difference between these third and fourth sums ((D2 + D3) - (D1 + D4)), which gives a signal ($S_P$) for checking the position.

**2.** Device according to Claim 1, characterized in that the optic (O2) is an integrated lens.

**3.** Device according to Claim 1, characterized in that the optic (O2) is an integrated parabolic mirror.

**4.** Device according to Claim 1, characterized in that the four means for measuring the intensity received at four points consist of four photodetectors (D1, D2, D3, D4) placed at these four points (M1, M2, M3, M4).

**5.** Device according to Claim 1, characterized in that the four means for measuring the intensity received at four points consist of:

. four optical microguides (MG1, MG2, MG3, MG4) integrated into the guiding structure (20), each microguide having one end at one of the four points (M1, M2, M3, M4),

. four photodetectors (D1, D2, D3, D4) arranged respectively at the other ends of the microguides (MG1, MG2, MG3, MG4).

**6.** Device according to Claim 5, characterized in that the four photodetectors (D1, D2, D3, D4) are attached to the guiding structure (20).

**7.** Device according to any one of Claims 1 to 6, characterized in that it is integrated into an integrated-optics read head (20, S, P, MP1, MP2, RCP, LS, D), this head producing a light beam directed onto a track of a recording medium (10), the image, the focusing and position of which are desired to be checked, being the image (I) produced by this beam on the said track (10) which it is desired to check, the position check then being a track-following check.

**8.** Device according to Claim 7, characterized in that the integrated-optics read head comprises a collimation optic (MP2) placed on the exit side of the head, the device comprising another optic, for collimation, which consists of this collimation optic (MP2) of the head.

**9.** Device according to Claim 8, characterized in that it comprises a splitter plate (42) placed between the collimation optic (O1) and the focusing optic (O2), this splitter plate (42) taking off part of the collimated beam coming from the collimation optic (O1).

**10.** Device according to Claim 7, characterized in that the read head comprises at least one additional microguide (MGO) having a first end lying at a point (MO) which coincides with the focus (34) of the focusing optic and a second end coupled to a detector (D0).

FIG. 1

FIG. 2

FIG. 3

FIG. 4

FIG. 5

FIG. 6

FIG. 7

FIG. 8

FIG. 9

FIG. 10